# EUROPEAN PATENT APPLICATION

(11) **EP 4 524 737 A1**
(43) Date of publication of application: **19.03.2025**
(21) Application number: 22941676.3
(22) Date of filing: 12.05.2022
(51) Int. Cl.: G06F 9/48

(54) **INTRA-SERVER DELAY CONTROL DEVICE, INTRA-SERVER DELAY CONTROL METHOD, AND PROGRAM**

(71) Applicant: Nippon Telegraph And Telephone Corporation, Chiyoda-ku Tokyo 100-8116 (JP)
(72) Inventor: FUJIMOTO, Kei, Musashino-shi, Tokyo 180-8585 (JP); NATORI, Ko, Musashino-shi, Tokyo 180-8585 (JP)
(74) Representative: Dehns
(86) International application number: PCT/JP2022/020051
(87) International publication number: WO 2023/218596

(57) **Abstract**

An intra-server delay control device (100) that is set up in a kernel space of an OS and started as a thread to use a polling model to monitor an arriving packet, wherein the thread has operation modes of a sleep control mode in which the thread is put to sleep and a constantly busy poll mode in which the thread is kept constantly busy polling, and the intra-server delay control device includes a traffic frequency measurement unit (160) that measures traffic inflow frequency, and a mode switching control unit (150) that switches an operation mode of the thread between the sleep control mode and the constantly busy poll mode, on the basis of the traffic inflow frequency measured by the traffic frequency measurement unit (160).

## Description

### Technical Field

The present invention relates to an intra-server delay control device, an intra-server delay control method, and a program.

### Background Art

A system has been developed and operated for each service, based on the progress of a virtualization technology through network functions virtualization (NFV), and the like. Instead of the mode of developing a system for each service as described above, a mode referred to as service function chaining (SFC) is now becoming mainstream. The SFC is a mode in which a service function is divided into reusable module units, and one or more module units are operated in an independent virtual machine (such as a VM and a container) environment so as to be used as one or more components as necessary, thereby improving operability.

As a technique of forming a virtual machine, a hypervisor environment including Linux (registered trademark) and a kernel-based virtual machine (KVM) is known. In this environment, a host OS (an Operating System or OS installed in a physical server) having a KVM module runs, as a hypervisor, in a memory area referred to as a kernel space which is different from a user space. In this environment, a virtual machine runs in the user space, and a guest OS (an OS installed in a virtual machine) runs in the virtual machine.

Unlike the physical server in which the host OS runs, the virtual machine in which the guest OS runs is designed such that all hardware (HW) including a network device (typically an Ethernet card device or the like) is controlled via one or more registers for processing interrupts from the HW to the guest OS and/or write operation from the guest OS to the hardware. In such register control, notifications and processing that would normally be performed by physical hardware are emulated by software, and therefore performance is generally lower than that in the host OS environment.

To counter this performance degradation, there is a technique of reducing HW emulation, especially for interrupts from a guest OS to a host OS or an external process outside its host virtual machine and thus enhancing communication performance and versatility with a high-speed and unified interface. As this technique, a device abstraction technique referred to as virtio or a quasi-virtualization technology, has been developed and already incorporated into, and used in, many general-purpose OSs such as Linux and FreeBSD (registered trademark).

For inputting/outputting data such as through console, file input-output, network communication, virtio defines data exchange using a queue designed from a ring buffer, as a transport for unidirectionally transferring transfer data, through queue operation. Communication between the guest OS and the outside of its own virtual machine can be implemented simply through queue operation, without executing hardware emulation, by preparing the number and the size of queues suitable for respective devices at the time of activation of the guest OS, based on the queue specification of the virtio.

### [Packet transfer by polling model (example of DPDK)]

A technique of connecting and coordinating a plurality of virtual machines with each other is referred to as inter-VM communication, and virtual switches have been normally used in a large-scale environment such as a data center, for connection between VMs. However, since the communication is significantly delayed with this technique, faster techniques have been newly suggested. Examples of the suggested techniques include one using special hardware referred to as single root I/O virtualization (SR-IOV), and one using software such as an Intel data plane development kit (Intel DPDK) (hereinafter referred to as a DPDK) that is a high-speed packet processing library.

The DPDK is a framework for performing network interface card (NIC) control, which has conventionally been performed by a Linux kernel (registered trademark), in a user space. The largest difference from the processing in a Linux kernel lies in having a polling-based receiving mechanism referred to as a pull mode driver (PMD). Normally, the Linux kernel has an interrupt when data has arrived at the NIC, and receiving process is triggered by the interrupt. In contrast the PMD has a dedicated thread continuously checking arrival of, and receiving, data. Overheads such as context switching and interrupts are eliminated, to allow for performing high-speed packet processing. The DPDK greatly improves performance and throughput of packet processing, to allow for securing more time for processing data plane application.

The DPDK exclusively uses computer resources such as a central processing unit (CPU) and a NIC. For this reason, it is difficult to use the DPDK for an application of flexibly switching modules, as with the SFC. There is a soft patch panel (SPP) as an application for alleviating this. The SPP prepares a shared memory between VMs, and allow the VMs to directly refer to the same memory space, so that packet copying in a virtualization layer is eliminated. Further, the DPDK is used to exchange packets between a physical NIC and the shared memory, to achieve higher speed. The SPP controls destinations in the memory space referred to from the VMs, to change input destinations and output destinations of packets by software. Through this processing, the SPP implements dynamic connection switching between VMs or between a VM and a physical NIC.

### [Packet processing at Rx, by New API (NAPI)]

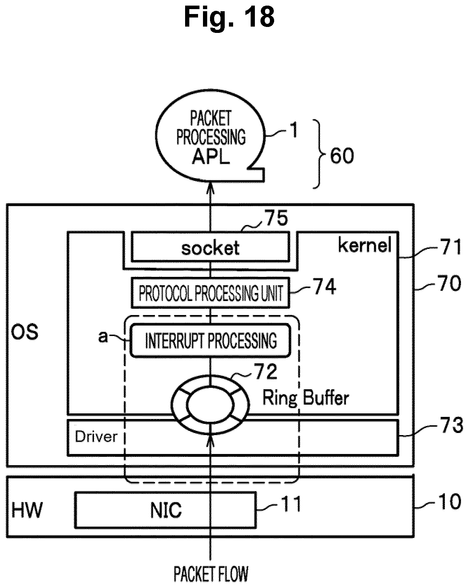

Fig. 18 is a schematic diagram of packet processing at Rx, with a New API (NAPI) implemented in Linux kernel 2.5/2.6 (see Non-Patent Literature 1).

As illustrated in Fig. 18, the New API (NAPI) executes a packet processing APL 1, set up in a user space 60 to be used by a user, in a server including an OS 70 (a host OS, for example), and performs packet transfer between a NIC 11 of a HW 10 connected to the OS 70 and the packet processing APL 1.

The OS 70 includes a kernel 71, a ring buffer 72, and a driver 73, and the kernel 71 includes a protocol processing unit 74.

The kernel 71 is a core function of the OS 70 (a host OS, for example), and manages monitoring of hardware and an execution state of a program for each process. Here, the kernel 71 responds to a request from the packet processing APL 1, and transmits a request from the HW 10 to the packet processing APL 1. The kernel 71 processes the request from the packet processing APL 1 via a system call ("a user program running in unprivileged mode" requests "a kernel running in privileged mode" to perform processing).

The kernel 71 transmits a packet to the packet processing APL 1 via a socket 75. The kernel 71 receives a packet from the packet processing APL 1 via the socket 75.

The ring buffer 72 is managed by the kernel 71, and is in a memory space in the server. The ring buffer 72 is a buffer in a fixed size to store messages output from the kernel 71 as a log, and is overwritten from the beginning point once the storing size exceeds its upper limit.

The driver 73 is a device driver for monitoring hardware by the kernel 71. Note that the driver 73 depends on the kernel 71 and can be changed when a kernel source, from which the driver has been created (built), changes. In this case, what is required is to obtain a driver source and rebuild the driver under the OS to be used, to create the driver.

The protocol processing unit 74 performs protocol processing in L2 (data link layer)/L3 (network layer)/L4 (transport layer) defined by an open systems interconnection (OSI) reference model.

The socket 75 is an interface for the kernel 71 performing interprocess communication. The socket 75 has a socket buffer, to prevent frequent data copy processing. A flow until establishment of communication via the socket 75 is as follows. 1) The server creates a socket file for accepting a client. 2) A name is given to the acceptance socket file. 3) A socket queue is created. 4) The first one in the socket queue of one or more connection requests from the client is accepted. 5) The client creates a socket file. 6) The client issues a connection request to the server. 7) The server creates a connection socket file separately from the reception socket file. As a result of communication establishment, the packet processing APL 1 can invoke a system call such as read () or write () from/to the kernel 71.

In the above configuration, the kernel 71 receives notification from the NIC 11 that a packet has arrived, through a hardware interrupt (hardIRQ), and schedules a software interrupt (softIRQ) for packet processing.

When a packet arrives, the New API (NAPI) implemented by the Linux kernel 2.5/2.6 performs packet processing through the software interrupt (softIRQ) after the hardware interrupt (hardIRQ). As illustrated in Fig. 18, in packet transfer using an interrupt model, a packet is transferred through interrupt processing (see reference sign a in Fig. 18). Therefore, queueing is required for the interrupt processing, to increase a packet transfer delay.

### [Configuration for Packet processing at Rx, by New API (NAPI)]

### <Device driver>

An outline of packet processing at NAPI Rx is described below.

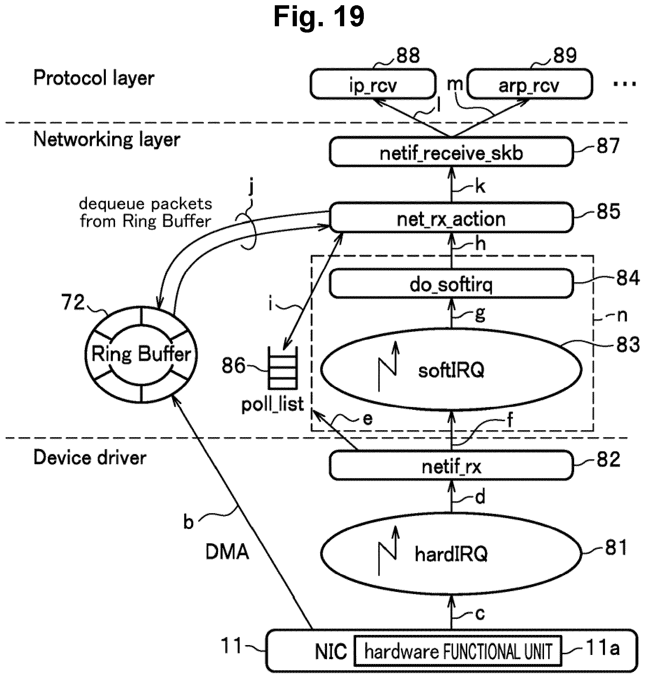

Fig. 19 is a diagram illustrating an overview of the packet processing at Rx, by the New API (NAPI), in a portion enclosed by a broken line in Fig. 18.

As illustrated in Fig. 19, a device driver is provided with the NIC 11 (physical NIC) as a network interface card, a hardIRQ 81 as a handler invoked in response to a request to be processed by the NIC 11, to execute the requested processing (hardware interrupt), and netif_rx 82 as a processing unit of software interrupt.

### <Networking layer>

A networking layer is provided with a softIRQ 83 as a handler invoked in response to a request to be processed by the netif_rx 82, to execute the requested processing (software interrupt) and a do_softirq 84 as a control unit to actually execute the software interrupt (softIRQ). The networking layer also includes a net_rx_action 85 as a packet processing unit to receive and perform a software interrupt (softIRQ), a poll_list 86 added with net device (net_device) information indicating a device which has caused a hardware interrupt from the NIC 11, a netif_receive_skb 87 to create an sk_buff structure (a structure for making the kernel 71 perceive the state of a packet), and the ring buffer 72.

### <Protocol layer>

A protocol layer is provided with an ip_rcv 88 and an arp_rcv 89, as packet processing units, and the like.

The netif_rx 82, do_softirq 84, net_rx_action 85, netif_receive _skb 87, ip_rcv 88, and arp_rcv 89 are program components (names of functions) to be used for packet processing in the kernel 71.

### [Packet processing at Rx, by New API (NAPI)]

Arrows (reference signs) b to m in Fig. 19 indicate a flow of the packet processing at Rx.

Upon receipt of a packet (or a frame) into a frame from a counterpart device, a hardware function unit 11a of the NIC 11 (hereinafter referred to as the NIC 11) copies the arrived packet to the ring buffer 72 through direct memory access (DMA) transfer (see reference sign b in Fig. 19), without using the CPU. The ring buffer 72 is the memory space in the server and is managed by the kernel 71 (see Fig. 18).

However, the kernel 71 cannot recognize the packet just by the NIC 11 copying the packet that has arrived at the ring buffer 72. Therefore, when the packet arrives, the NIC 11 puts up a hardware interrupt (hardIRQ) to the hardIRQ 81 (see reference sign c in Fig. 19), and the netif_rx 82 executes the processing described below, so that the kernel 71 recognizes the packet. Note that the hardIRQ 81 enclosed by an ellipse in Fig. 19 represents a handler, not a functional unit.

The netif_rx 82 functions as an actual processor, and, when the hardIRQ 81 (handler) starts (see reference sign d in Fig. 19), the netif_rx 82 stores, in the poll_list 86, information regarding the net device (net_device), as a piece of information contained in the hardware interrupt (hardIRQ), indicating a device which has caused the hardware interrupt from the NIC 11. Then, the netif_rx 82 adds dequeuing (to refer to content of a packet stacked in the buffer and delete a corresponding queue entry from the buffer, in consideration of the next processing for the packet) (see reference sign e in Fig. 19). Specifically, when packets are stacked into the ring buffer 72, the netif_rx 82 adds subsequent dequeuing, in the poll_list 86, by using a driver of the NIC 11. Thus, dequeuing information caused by stacking of the packets into the ring buffer 72 is added in the poll_list 86.

As described above, in <Device driver> in Fig. 19, when receiving a packet, the NIC 11 copies the arrived packet to the ring buffer 72 by DMA transfer. The NIC 11 also starts the hardIRQ 81 (handler), and the netif_rx 82 adds net_device in the poll_list 86 and schedules a software interrupt (softIRQ).

Up to this point, the hardware interrupt processing in <Device driver> in Fig. 19 is stopped.

Thereafter, the netif_rx 82 puts up a software interrupt (softIRQ) to the softIRQ 83 (handler) for dequeuing data stored in the ring buffer 72 by using information (specifically, pointers) in the queue stacked in the poll_list 86 (see reference sign f in Fig. 19) and notifies the do_softirq 84 serving as the software interrupt control unit of the dequeuing (see reference sign g in Fig. 19).

The do_softirq 84 is a software interrupt control unit, and defines functions of software interrupts (to define interrupt processing as one of various kinds of packet processing). Based on the definition, the do_softirq 84 notifies the net _rx_action 85 that actually performs software interrupt processing of a current (relevant) software interrupt request (see reference sign h in Fig. 19).

When having a turn of the softIRQ, the net_rx_action 85 invokes a polling routine for dequeuing packets from the ring buffer 72 on the basis of the net_device added in the poll_list 86 (see reference sign i in Fig. 19) and dequeues the packets (see reference sign j in Fig. 19). At this time, the net_rx_action 85 continues the dequeuing until the poll_list 86 becomes empty.

Thereafter, the net _rx_action 85 transmits a notification to the netif_receive_skb 87 (see reference sign k in Fig. 19).

The netif_receive_skb 87 creates a sk_buff structure, analyzes content of the packets, and delegates processing to the protocol processing unit 74 in the subsequent stage (see Fig. 18) for each type. That is, the netif_receive_skb 87 analyzes content of the packets, and delegates the processing to the ip_rcv 88 in <Protocol Layer> (reference sign l in Fig. 19) for processing by the content of the packets (reference sign l in Fig. 19), while delegates the processing to the arp_rcv 89 for L2 processing, for example (reference sign m in Fig. 19).

Patent Literature 1 describes an intra-server network delay control device (KBP: kernel busy poll). The KBP is set up in the kernel and uses a polling model to constantly monitor an arriving packet. Thus, softIRQ is reduced, and low-latency packet processing is achieved.

### Citation List

### Patent Literature

Patent Literature 1: International Patent Application Publication No. 2021/130828 A1

### Non-Patent Literature

Non-Patent Literature 1: New API(NAPI), [online], [Searched on April 4, 2022], the Internet <URL: http://lwn.net/2002/0321/a/napi-howto.php3>

### Summary of Invention

### Problem To Be Solved

However, packet transfer by either one of an interrupt model and a polling model has the following problems.

The interrupt model performs packet transfer through software interrupt processing for the kernel that has received an event (hardware interrupt) from HW to perform packet processing. Therefore, the interrupt model performs packet transfer through interrupt (software interrupt) processing, and thus contention can occur with another interrupt or queueing is required when a CPU to be interrupted is used for a process having higher priority, to have a problem of longer delay in packet transfer. In this case, when interrupt processing is congested, queueing delay becomes even longer.

A mechanism of having a delay in an interrupt model is described in further detail.

In a general kernel, packet transfer processing is communicated through software interrupt processing after hardware interrupt processing.

When a software interrupt of packet transfer processing occurs, the software interrupt processing cannot be immediately performed under the conditions (1) to (3) listed below. For this reason, the interrupt processing is scheduled through arbitration by a scheduler such as ksoftirqd (the kernel thread for each CPU executed when the load of processing a software interrupt is high), to have queueing in the order of milliseconds.
(1) In a case of contention with other hardware interrupt processing
(2) In a case of contention with other software interrupt processing
(3) In a case of another process with higher priority or kernel thread (for example, migration thread) using the CPU to be interrupted

Under the above conditions, the software interrupt processing cannot be immediately performed.

Also, packet processing by the New API (NAPI) may have NW delay in the order of milliseconds due to contention of interrupt processing (softIRQ), as shown in a box n enclosed by a dashed-line in Fig. 19.

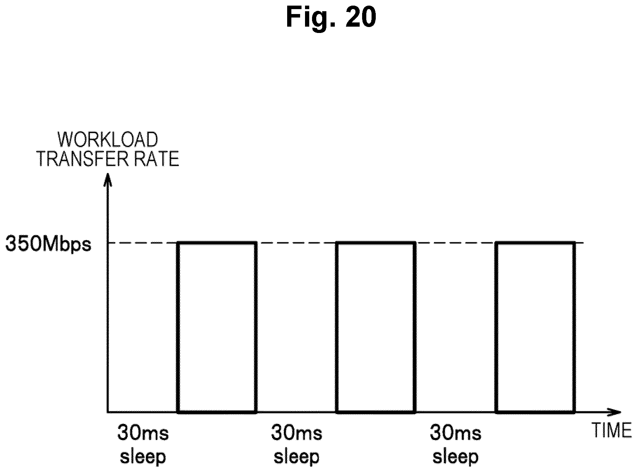

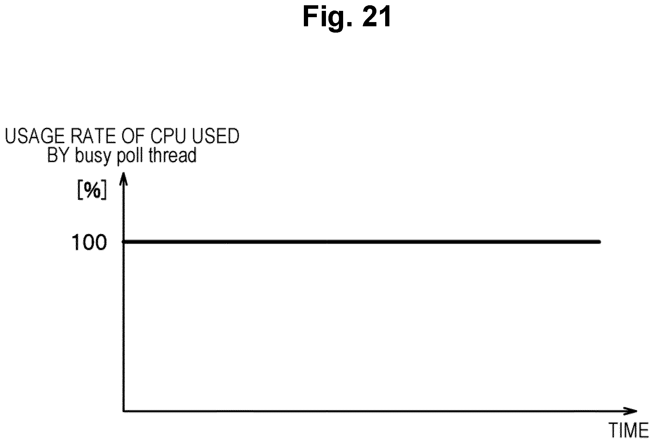

In contrast, when the technique described in Patent Literature 1 is used, an arriving packet is constantly monitored, to allow for preventing software interrupt to dequeue the packet with low-latency. However, since monitoring an arriving packet occupies the CPU core and uses the CPU time, power consumption increases. Specifically, since the kernel thread constantly minitoring an arriving packet occupies the CPU core to constantly consume the CPU time, there is a problem of an increase in power consumption. A relationship between workload and the CPU usage rate will be described with reference to Figs. 20 and 21.

Fig. 20 illustrates an example of transfer of video image data (30 FPS). The workload illustrated in Fig. 20 is to intermittently perform data transfer every 30 ms at a transfer rate of 350 Mbps.

Fig. 21 is a graph illustrating the usage rate of the CPU that is being used by a busy poll thread in the KBP disclosed in Patent Literature 1.

As illustrated in Fig. 21, in the KBP, the kernel thread occupies the CPU core to perform busy polling. Even for receiving the intermittent packet illustrated in Fig. 20, the CPU is always used in the KBP, regardless of whether a packet arrives or not. Therefore, there is the problem of an increase in power consumption.

The present invention has been made in view of such a background, and an object of the present invention is to achieve power saving while achieving low latency by preventing sleep and wake-up operation when a traffic inflow frequency is "dense".

### Solution to Problem

In order to solve the above problem, an intra-server delay control device is set up in a kernel space of an OS and started as a thread to use a polling model to monitor an arriving packet, wherein the thread has operation modes of a sleep control mode in which the thread is put to sleep and a constantly busy poll mode in which the thread is kept constantly busy polling, and the intra-server delay control device includes: a traffic frequency measurement unit that measures traffic inflow frequency; a mode switching control unit that switches the operation mode of the thread between the sleep control mode and the constantly busy poll mode, on the basis of the traffic inflow frequency measured by the traffic frequency measurement unit; and a packet arrival monitoring unit that, during the constantly busy poll mode, monitors a pole list added with net device information indicating a device which has caused a hardware interrupt from an interface unit and confirms whether or not a packet has arrived.

### Advantageous Effects of the Invention

The present invention achieves power saving while achieving low latency by preventing sleep and wake-up operation when a traffic inflow frequency is "dense".

### Brief Description of Drawings

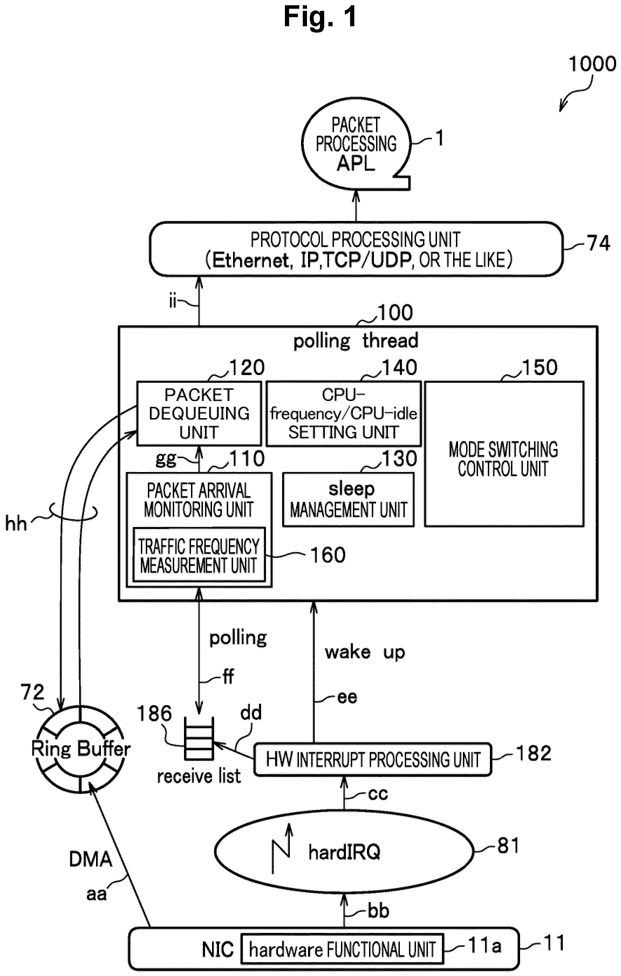

Fig. 1 is a schematic configuration diagram of an intra-server delay control system according to an embodiment of the present invention;

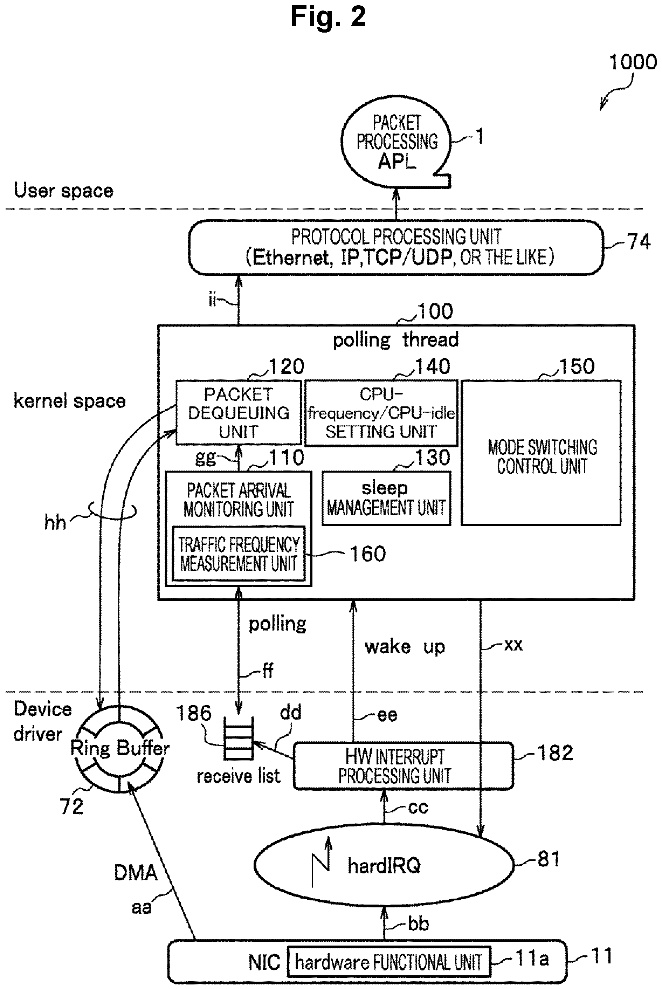

Fig. 2 shows a configuration example in which a polling thread (intra-server delay control device) in Fig. 1 is set up in a kernel space;

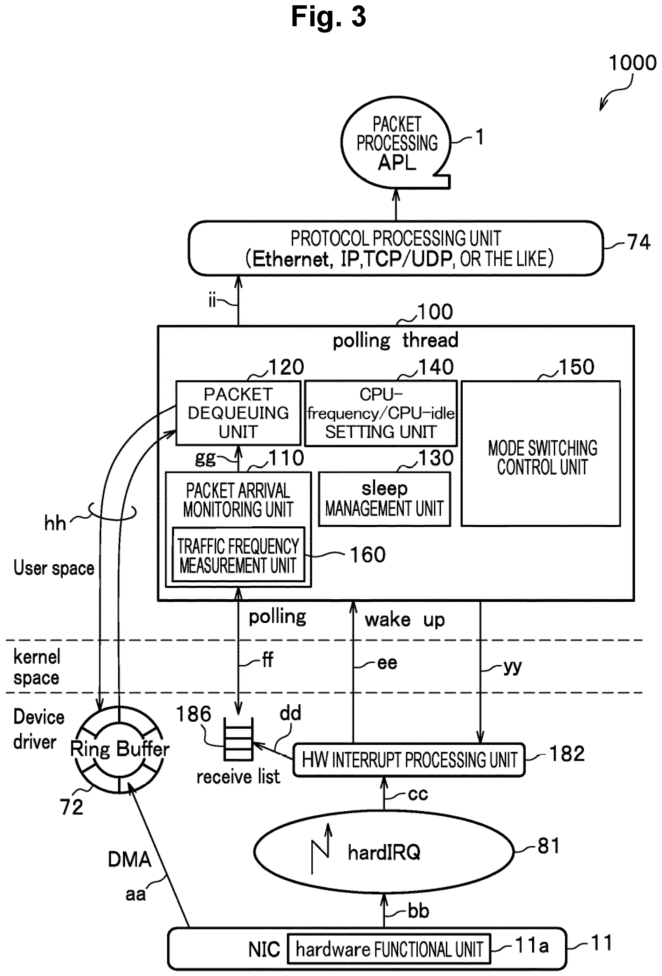

Fig. 3 shows a configuration example in which the polling thread (intra-server delay control device) in Fig. 1 is set up in a user space;

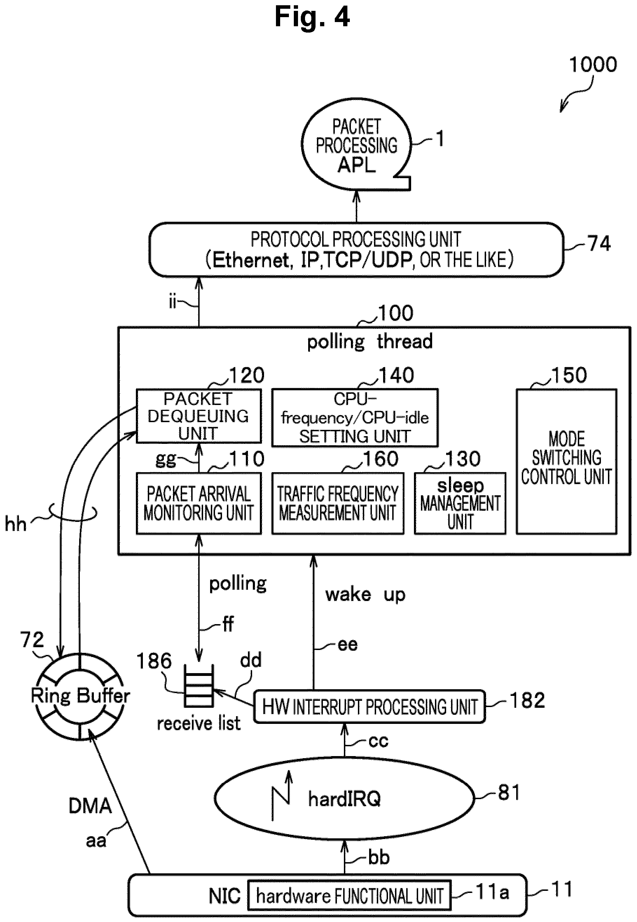

Fig. 4 is a diagram illustrating setup of a traffic frequency measurement unit of the polling thread (intra-server delay control device) in Fig. 1;

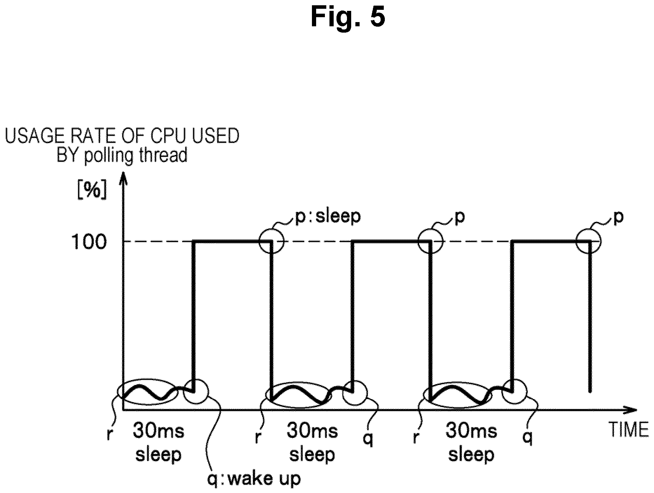

Fig. 5 is a diagram illustrating example operation of the polling thread when a traffic inflow frequency to the intra-server delay control device of the intra-server delay control system according to the embodiment of the present invention is "sparse";

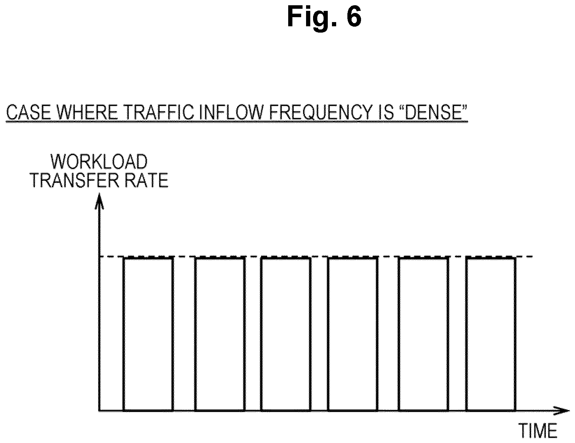

Fig. 6 shows a data transfer case where the traffic inflow frequency to the intra-server delay control system according to the embodiment of the present invention is "dense";

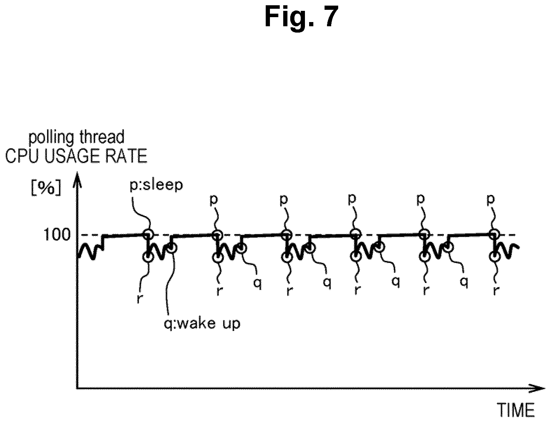

Fig. 7 is a diagram illustrating example operation of the polling thread in a data transfer case in Fig. 6 where the traffic inflow frequency is "dense";
Fig**.** 8 is a diagram illustrating an operation mode switching point of the intra-server delay control device of the intra-server delay control system according to the embodiment of the present invention;
Fig**.** 9 shows a table of example logics for determining switching of the intra-server delay control device of the intra-server delay control system according to the embodiment of the present invention;

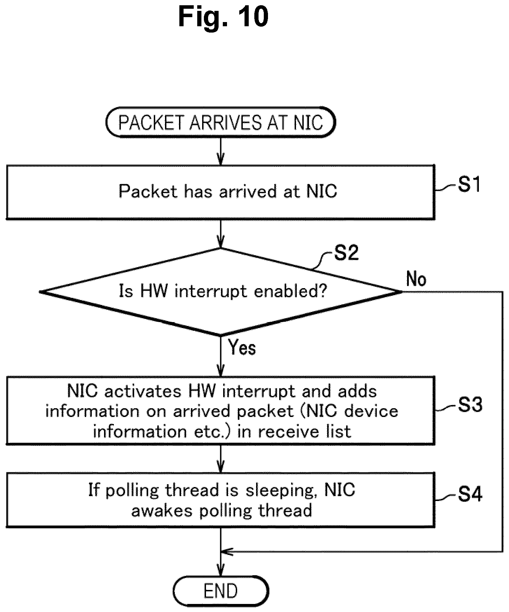

Fig. 10 is a flowchart of processing of a NIC and HW interrupt with the intra-server delay control device of the intra-server delay control system according to the embodiment of the present invention;

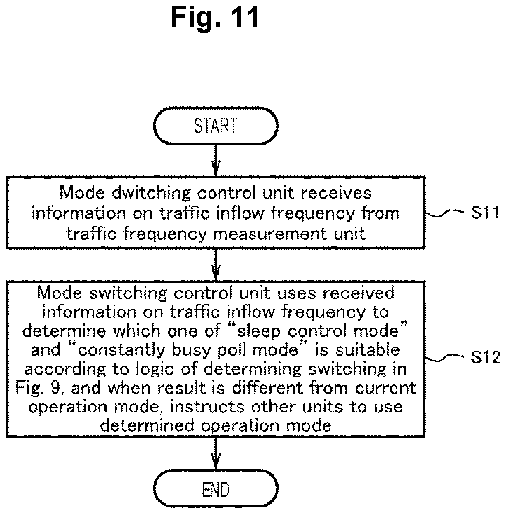

Fig. 11 is a flowchart of switching operation mode by a mode switching control unit of the intra-server delay control device of the intra-server delay control system according to the embodiment of the present invention;

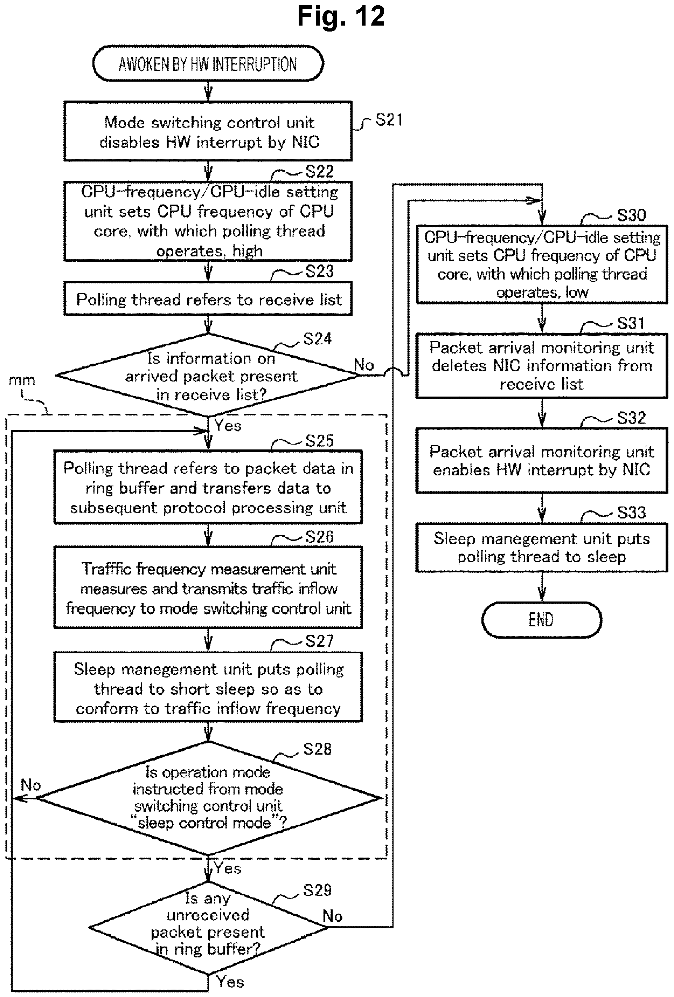

Fig. 12 is a flowchart of switching the operation mode by the polling thread as the intra-server delay control device of the intra-server delay control system according to the embodiment of the present invention;

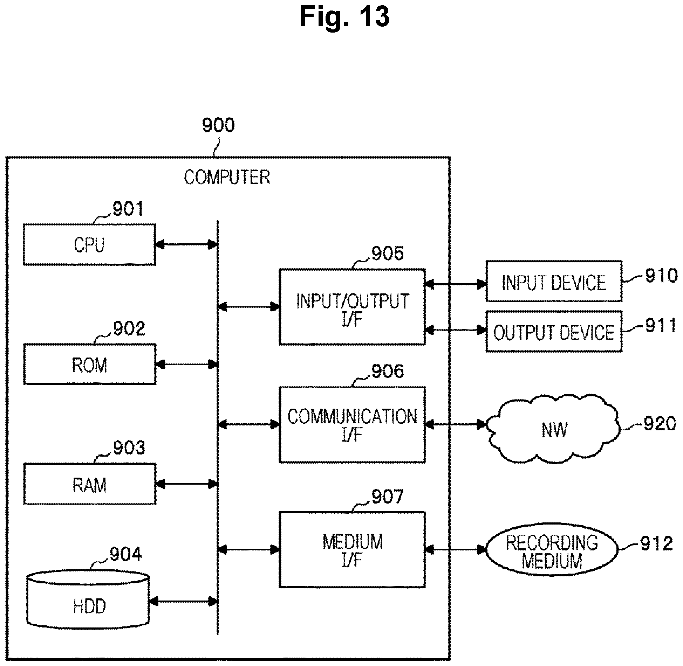

Fig. 13 is a diagram illustrating an example hardware configuration of a computer to implement functions of the intra-server delay control device of the intra-server delay control system according to the embodiment of the present invention;

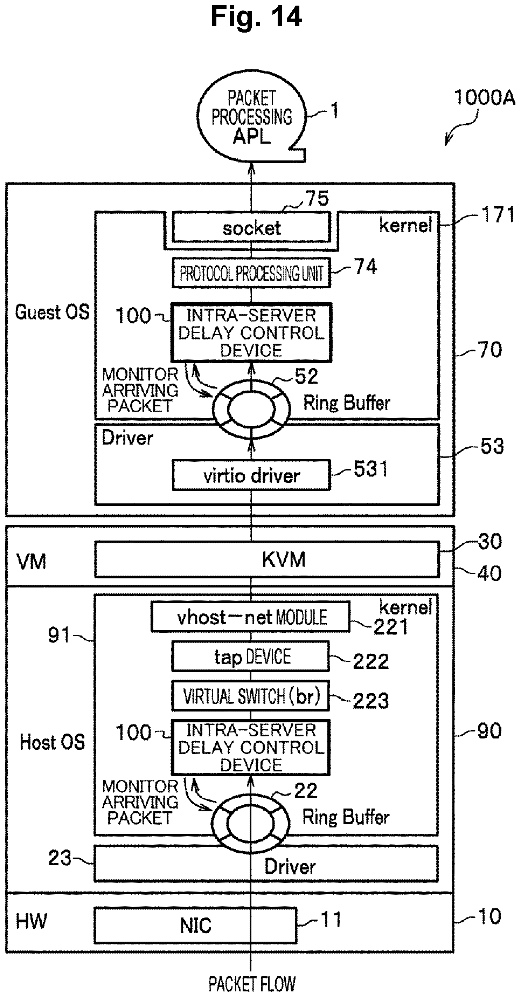

Fig. 14 is a diagram illustrating a case where an intra-server delay control system having the polling thread set up in a kernel is applied to an interrupt model in a virtualized server environment including a general-purpose Linux kernel (registered trademark) and a VM;

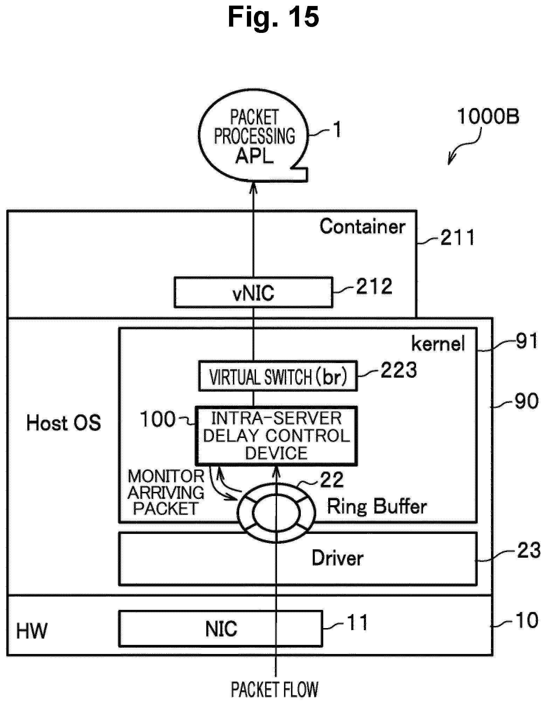

Fig. 15 is a diagram illustrating a case where an intra-server delay control system having the polling thread set up in a kernel is applied to an interrupt model in a container-based virtualized server environment;

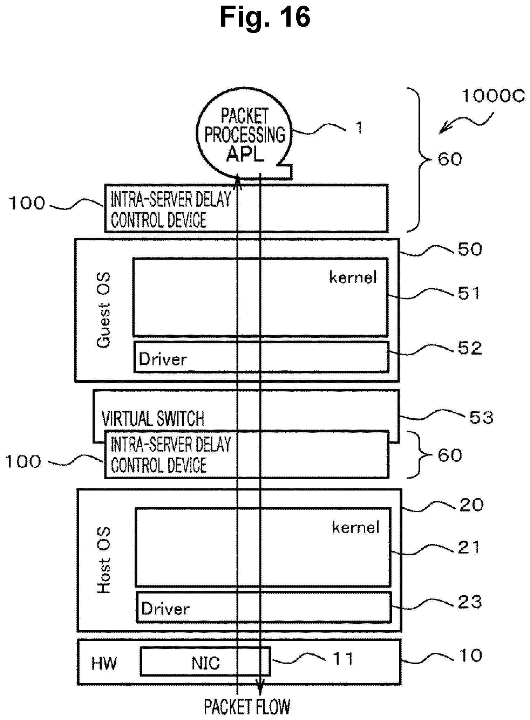

Fig. 16 is a diagram illustrating a case where an intra-server delay control system having the polling thread set up in a user space is applied to an interrupt model in a virtualized server environment including a general-purpose Linux kernel (registered trademark) and a VM;

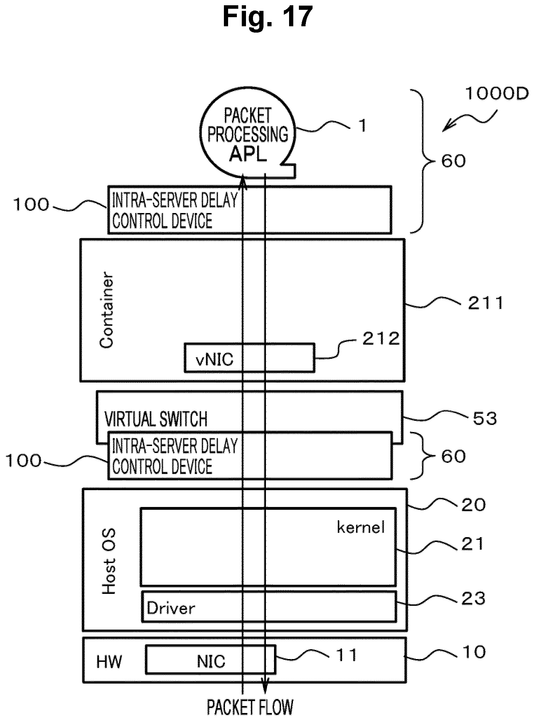

Fig. 17 is a diagram illustrating a case where an intra-server delay control system having the polling thread set up in a user space is applied to an interrupt model in a container-based virtualized server environment;
Fig. 18 is a schematic diagram of packet processing at Rx by a New API (NAPI) implemented by Linux kernel 2.5/2.6;
Fig. 19 is a diagram illustrating an outline of the packet processing at Rx by the New API (NAPI) at a portion enclosed by a broken line in Fig. 18;
Fig. 20 is a diagram illustrating an example of data transfer of video (30 FPS); and
Fig. 21 is a diagram illustrating the usage rate of a CPU used by a busy poll thread in KBP described in Patent Literature 1.

### Description of Embodiments

### [Overview]

Hereinafter, a description is given of an intra-server delay control system and the like according to a mode for implementing the present invention (hereinafter, referred to as "the present embodiment"), with reference to the drawings.

Fig. 1 is a schematic configuration diagram of an intra-server delay control system according to an embodiment of the present invention. The present embodiment is an example in which the system is applied to packet processing at Rx by a New API (NAPI) implemented by Linux kernel 2.5/2.6. The same components as those in Fig. 18 are denoted by the same reference signs.

As illustrated in Fig. 1, an intra-server delay control system 1000 executes a packet processing APL 1, which is set up in a user space for use by a user, in a server with an OS (a host OS, for example), to perform packet transfer between a NIC 11 as HW connected to the OS and the packet processing APL 1.

The intra-server delay control system 1000 includes the NIC 11 (physical NIC) which is a network interface card, a hardIRQ 81 which is a handler invoked in response to a processing request from the NIC 11 to execute the requested processing (hardware interrupt), a HW interrupt processing unit 182 which is a processing unit of a HW interrupt, a receive list 186, a ring buffer 72, a polling thread (intra-server delay control device 100), and a protocol processing unit 74.

The ring buffer 72 is managed by a kernel in a memory space in the server. The ring buffer 72 is a buffer in a fixed size to store messages output from the kernel as a log, and is overwritten from the beginning point once the storing size exceeds its upper limit.

The protocol processing unit 74 is Ethernet, IP, TCP/UDP, or the like. The protocol processing unit 74 performs protocol processing of L2/L3/L4 defined by the OSI reference model, for example.

### <Intra-server delay control device>

The intra-server delay control device 100 is a polling thread set up in either a kernel space or a user space.

The intra-server delay control device 100 includes a packet arrival monitoring unit 110, a packet dequeuing unit 120, a sleep management unit 130, a CPU-frequency/CPU-idle setting unit 140, a mode switching control unit 150, and a traffic frequency measurement unit 160. In Fig. 1, the packet arrival monitoring unit 110 includes the traffic frequency measurement unit 160.

The packet arrival monitoring unit 110 is a thread for monitoring whether a packet has arrived. The packet arrival monitoring unit 110 monitors (polls) the receive list 186.

The packet arrival monitoring unit 110 acquires, from the receive list 186, pointer information to one or more packets in the ring buffer 72, and net_device information, and transmits the information (the pointer information and the net_device information) to the packet dequeuing unit 120. Here, when a plurality of pieces of packet information exists in the receive list 186, a plurality of pieces of the information is transmitted.

When a packet has arrived, the packet dequeuing unit 120 executes dequeuing to refer to the packet stored in the ring buffer 72, and delete a corresponding queue entry from the ring buffer 72, on the basis of the next processing for the packet (hereinbelow, this processing may be referred to simply as dequeuing a packet from the ring buffer 72). The packet dequeuing unit 120 retrieves a packet from the ring buffer 72 on the basis of the received information, and transmits the packet to the protocol processing unit 74.

When a plurality of packets is stacked in the ring buffer 72, the packet dequeuing unit 120 dequeues the plurality of packets at a time and passes the packets to the subsequent protocol processing unit 74. Note that the number of packets dequeued at a time is called quota, and is also often called batch processing. The protocol processing unit 74 also performs protocol processing at a time on a plurality of packets, and thus the processing is performed at high speed.

The sleep management unit 130 puts the thread (polling thread) to sleep when no packets have arrived over a predetermined period, and when a packet has arrived, causes a hardware interrupt (hardIRQ) for the thread to awake the thread (polling thread) (described below in detail).

During sleep, the CPU-frequency/CPU-idle setting unit 140 sets a low frequency for the CPU operation frequency of the CPU core to be used by the thread (polling thread). During sleep, the CPU-frequency/CPU-idle setting unit 140 sets a CPU idle of the CPU core used by this thread (polling thread) to a power-saving mode (described below in detail).

The mode switching control unit 150 switches the operation mode of the polling thread between a sleep control mode and a constantly busy poll mode, on the basis of the traffic inflow frequency measured by the traffic frequency measurement unit 160. For example, the mode switching control unit 150 performs mode switching control to switch the operation mode of the polling thread to the "sleep control mode (mode in which the polling thread is allowed to sleep)" when the traffic inflow frequency (packet inflow frequency) is low and to the "constantly busy poll mode (mode in which the polling thread performs constantly busy polling)" when the traffic inflow frequency is high, according to the traffic inflow frequency information measured by the traffic frequency measurement unit 160.

Here, the operation mode of the polling thread is either the "sleep control mode" or the "constantly busy poll mode". When the operation mode is not the "sleep control mode", the operation mode has been switched to the "constantly busy poll mode". When the operation mode is not the "constantly busy poll mode", the operation mode has been switched to the "sleep control mode".

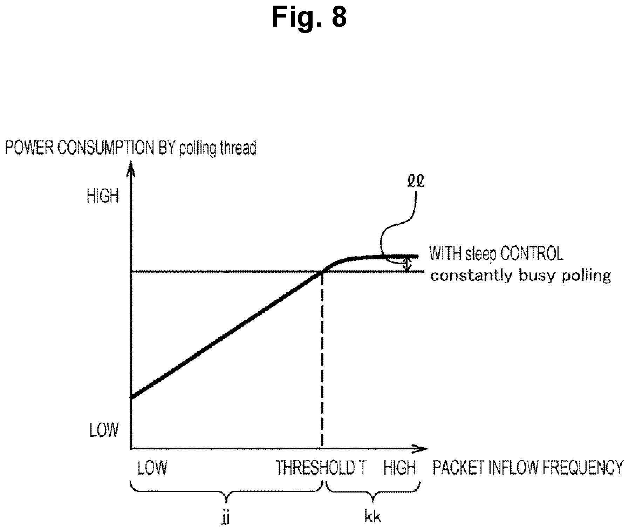

In addition, "when the traffic inflow frequency is low" mentioned above refers to a situation where the packet inflow frequency is lower than a threshold T (Fig. 8) as in a situation where the traffic inflow frequency is "sparse" (Fig. 20), and "when the traffic inflow frequency is high" mentioned above refers to a situation where the traffic inflow frequency is equal to or greater than the threshold T (Fig. 8) as in a situation where the traffic inflow frequency is "dense" (Fig. 6) (described below).

The traffic frequency measurement unit 160 measures the traffic inflow frequency and transmits the traffic inflow frequency to the mode switching control unit 150. The traffic frequency measurement unit 160 may measure the traffic frequency by approximately estimating the traffic frequency from the number of HW interrupts (recorded as statistical information in the kernel) or the like.

### <Setup of intra-server delay control device>(Polling thread set up in kernel space)

Figs. 2 and 3 are diagrams for illustrating location of the polling thread (intra-server delay control device 100) in Fig. 1.

Fig. 2 shows a configuration example in which the polling thread (intra-server delay control device 100) in Fig. 1 is set up in a kernel space.

In the intra-server delay control system 1000 illustrated in Fig. 2, the polling thread (intra-server delay control device 100) and the protocol processing unit 74 are set up in the kernel space. This polling thread (intra-server delay control device 100) runs in the kernel space. The intra-server delay control system 1000 executes the packet processing APL 1 set up in the user space, on the server with the OS, and performs packet transfer between the NIC 11 of the HW and the packet processing APL1 via the device driver connected to the OS.

Note that as illustrated in Fig. 2, the device driver is provided with the hardIRQ 81, the HW interrupt processing unit 182, the receive list 186, and the ring buffer 72.

The device driver is a driver for monitoring hardware.

With the polling thread in the kernel, the mode switching control unit 150 of the intra-server delay control device 100 periodically awakes the thread while the thread is sleeping, or awakes the thread immediately before arriving of a packet in time with the packet arriving. The mode switching control unit 150 manages HW interrupt, and controls putting the polling thread to sleep and enabling/disabling the HW interrupt with respect to the hardIRQ 81 (see reference sign xx in Fig. 2).

The present invention can be applied to a case where a polling thread is set up in the kernel space, as with the NAPI or KBP.
(Polling thread set up in user space)

Fig. 3 shows a configuration example in which the polling thread (intra-server delay control device 100) in Fig. 1 is set up in a user space.

In the intra-server delay control system 1000 illustrated in Fig. 3, the polling thread (intra-server delay control device 100) and the protocol processing unit 74 are set up in the user space. This polling thread (intra-server delay control device 100) runs not in the kernel space but in the user space.

In the intra-server delay control system 1000 illustrated in Fig. 3, the polling thread (intra-server delay control device 100) performs packet transfer between the device driver, with the NIC 11, and the packet processing APL 1 while bypassing the kernel space.

With the polling thread in the user space, the mode switching control unit 150 of the intra-server delay control device 100 periodically awakes up the thread while the thread is sleeping, or awakes the thread immediately before arrival of a packet in time with the packet arriving. The mode switching control unit 150 manages HW interrupt, and controls the HW interrupt processing unit 182 to put the polling thread to sleep and enable/disable the HW interrupt (see reference sign yy in Fig. 3).

The present invention can be applied to a case where a polling thread resides in a user space, as with the DPDK.

### <Setup of traffic frequency measurement unit 160>[0059]

Fig. 4 is a diagram illustrating setup of the traffic frequency measurement unit 160 of the polling thread (intra-server delay control device 100) in Fig. 1.

As illustrated in Fig. 4, the traffic frequency measurement unit 160 of the intra-server delay control device 100 may be set up as a thread independent of the packet arrival monitoring unit 110, to measure the traffic frequency. In this case, the traffic frequency measurement unit 160 cannot directly measure the traffic frequency, but can measure the traffic frequency by approximately estimating the traffic frequency from the number of HW interrupts (recorded as statistical information in the kernel) or the like.

Operation of the intra-server delay control system 1000 configured as described above is described below.

The present invention can be applied to either a case where a polling thread is set up in the kernel space, as with the NAPI or KBP, or a case where a polling thread is set up in a user space, as with the DPDK. The description is given by way of example with the polling thread set up in the kernel space.

### [Packet processing operation at Rx according to the present invention]

Arrows (reference signs) aa to ii in Figs. 1 to 4 indicate the flow of packet processing at Rx.

Upon receipt of a packet (or a frame) into a frame from a counterpart device, the NIC 11 copies the arrived packet to the ring buffer 72 through DMA transfer (see reference sign aa in Figs. 1 to 4), without using the CPU. The ring buffer 72 is managed by <Device driver>.

When a packet has arrived, the NIC 11 puts up a hardware interrupt (hardIRQ) to the hardIRQ 81 (handler) (see reference sign bb in Figs. 1 to 4), and the HW interrupt processing unit 182 performs the processing described below to accept the packet.

When the hardIRQ 81 (handler) has been started (see reference sign cc in Fig. 1), the HW interrupt processing unit 182 stores, into the receive list 186, net device (net_device) information indicating a device which has caused a hardware interrupt from the NIC 11, as one piece of information contained in the hardware interrupt (hardIRQ), and adds dequeuing information. Specifically, when packets are stacked into the ring buffer 72, the HW interrupt processing unit 182 uses a driver of the NIC 11 to add, in the receive list 186, subsequent dequeuing (see reference sign dd in Figs. 1 to 4). Thus, dequeuing due to the packets having been stacked into the ring buffer 72 is added in the receive list 186.

The HW interrupt processing unit 182 adds a net_device in the receive list 186, but, unlike the netif_rx 82 in Fig. 19, does not schedule a software interrupt (softIRQ). That is, the HW interrupt processing unit 182 differs from the netif_rx 82 in Fig. 19 on the point that it does not schedule a software interrupt (softIRQ).

The HW interrupt processing unit 182 also executes wake-up operation to awake the sleeping polling thread (see reference sign ee in Figs. 1 to 4).

At this point, the hardware interrupt processing in <Device driver> in Figs. 1 to 4 is stopped.

The present embodiment excludes the softIRQ 83 and the do_softirq 84 in <Networking layer> in Fig. 19, and accordingly does not execute a notification in Fig. 19 (see reference sign f in Fig. 19) from the netif_rx 82 to start the softIRQ 83 (handler).

In the present embodiment, the intra-server delay control system 1000 excludes the softIRQ 83 and the do_softirq 84 illustrated in Fig. 19, and instead, includes the polling thread (intra-server delay control device 100) in <kernel space> (see Fig. 2). Alternatively, the intra-server delay control system 1000 includes the polling thread (intra-server delay control device 100) in <User space> (see Fig. 3).

The packet arrival monitoring unit 110 monitors (polls) the receive list 186 (see reference sign ff in Figs. 1 to 4), to check whether a packet has arrived or not.

The packet arrival monitoring unit 110 acquires, from the receive list 186, pointer information for a packet in the ring buffer 72 and net_device information, and transmits the information (the pointer information and the net_device information) to the packet dequeuing unit 120 (see reference sign gg in Figs. 1 to 4). In a case where a plurality of pieces of packet information exists in the receive list 186 herein, a plurality of pieces of the information is transmitted.

In a case where a packet has arrived, the packet dequeuing unit 120 of the intra-server delay control device 100 dequeues the packet from the ring buffer 72 (see reference sign hh in Figs. 1 to 4).

The packet dequeuing unit 120 retrieves the packet from the ring buffer 72 on the basis of the received information, and transmits the packet to the protocol processing unit 74 (see reference sign ii in Figs. 1 to 4).

### [Sleeping of polling thread]

The intra-server delay control system 1000 stops the softIRQ for packet processing, which is a main cause of a NW delay, and executes the polling thread in which the packet arrival monitoring unit 110 of the intra-server delay control device 100 monitors an arriving packet. The packet dequeuing unit 120 then, when a packet has arrived, uses a polling model (without softIRQ) to process the packet.

When a packet has arrived, the polling thread is awoken by a hardware interrupt handler, so that contention of softIRQ is avoided, to allow for immediate packet transfer. In other words, the packet arrival monitoring function is made to stand by, and is awoken by a hardware interrupt, to make the latency lower than that in packet transfer processing through a software interrupt caused by a NAPI or the like.

The polling thread (intra-server delay control device 100) to monitor packet arrival is allowed to sleep while there is no arriving packet.

The polling thread (intra-server delay control device 100) sleeps in accordance with the presence/absence of an arriving packet, and is awoken by the hardIRQ 81 when a packet has arrived. Specifically, the sleep management unit 130 of the intra-server delay control device 100 puts the polling thread to sleep in accordance with the presence/absence of an arriving packet, or when there is no arriving packet over a predetermined period. The sleep management unit 130 causes the hardIRQ 81 to awake the polling thread when a packet has arrived. As a result, contention of softIRQ is avoided, to achieve low latency.

The CPU-frequency/CPU-idle setting unit 140 of the intra-server delay control device 100 changes the CPU operation frequency and the idle setting, in accordance with the presence/absence of an arriving packet. Specifically, the CPU-frequency/CPU-idle setting unit 140 decreases the CPU frequency during sleep, and increases the CPU frequency when the polling thread is reactivated (restores the CPU operation frequency). The CPU-frequency/CPU-idle setting unit 140 also changes the CPU idle setting to power saving during sleep. Decreasing the CPU operation frequency and changing the CPU idle setting to power saving, during sleep, allow for achieving power saving.

### [Example operation of polling thread by Traffic inflow frequency]

### <Case with "sparse" traffic inflow frequency>

First, a case where the traffic inflow frequency is "sparse" is described.

Fig. 5 is a diagram illustrating example operation of the polling thread when the traffic inflow frequency to the intra-server delay control device 100 is "sparse". The ordinate axis indicates the CPU usage rate [%] of the CPU core used by the polling thread, and the abscissa axis indicates time. Note that Fig. 5 illustrates example operation of the polling thread when packets have arrived that correspond to the video (30 FPS) data transfer case in Fig. 20 in which packets are intermittently received.

Fig. 5 shows a case where the traffic inflow frequency is "sparse" as in the video (30 FPS) data transfer case in Fig. 20. Note that a case where the traffic inflow frequency is "dense" is described below with reference to Fig. 6.

As illustrated in Fig. 5, the sleep management unit 130 of the intra-server delay control device 100 puts the polling thread to sleep (see reference sign p: sleep in Fig. 5) when there has been no arriving packet over a predetermined period (more specifically, when there is no subsequently arriving packet even after a fixed value (a fixed period) determined beforehand by a maintenance personnel/operator has elapsed since a certain packet has arrived). The sleep management unit 130 then causes the hardIRQ 81, when a packet has arrived, to activate the polling thread (see reference sign q: wake up in Fig. 5).

Note that, during sleep, the kernel thread does not occupy the CPU core, and the CPU core may therefore process a timer interrupt for stabilizing the system operation or a migration thread for performing error processing or the like, other than the polling thread, to fluctuate the CPU usage rate of the CPU core used by the polling thread (see reference sign r in Fig. 5).

As illustrated in the example operation of the polling thread in Fig. 5, putting the polling thread to sleep can sufficiently obtain the power saving effect when the traffic inflow amount is small.

### <Case with "dense" traffic inflow frequency>

Next, a case where the traffic inflow frequency is "dense" is described.

Fig. 6 shows a data transfer case where the traffic inflow frequency is "dense". As can be seen from comparison with Fig. 20, the workload illustrated in Fig. 6 has high traffic inflow frequency, that is, the traffic inflow frequency is "dense" in the time axis direction.

One example is when data arrives at short intervals between symbols in time direction (for example, intervals of 8.92 us or 4.46 us), such as numerology = 3 or 4 in a virtual radio access network (vRAN)or a virtual distributed unit (vDU) system.

Fig. 7 is a diagram illustrating example operation of the polling thread in the data transfer case in Fig. 6 where the traffic inflow frequency is "dense". The ordinate axis indicates the CPU usage rate [%] of the CPU core used by the polling thread, and the abscissa axis indicates time. The same operation of polling thread as in Fig. 5 is denoted by the same reference sign.

When the traffic inflow amount is large as illustrated in Fig. 6, that is, when the traffic inflow frequency is "dense", the sleeping time is shortened, and sleep and wake-up are repeated at a high frequency, as illustrated in Fig. 7 (see reference sign r: sleep and q: wake up in Fig. 7).

When the traffic inflow frequency is "dense", sleep and wake-up operation is repeated at a high frequency, so that the CPU usage rate cannot be reduced. For this reason, the increase in power consumption of the CPU cycle due to the interrupt overhead at wake-up time becomes larger than the effect of reduction in power consumption of the CPU cycle due to sleeping, and as a result, there is a case where the power consumption increases due to sleeping.

As described above, when the traffic inflow frequency is "sparse" (see Fig. 5), the power saving effect can be sufficiently obtained. However, when the traffic inflow frequency is "dense", there is a case where the power consumption can be reduced by simply performing constantly busy polling without putting the polling thread to sleep.

### <Power consumption comparison between "sleep control mode" and "constantly busy poll mode">

Next, the reason why the power consumption is smaller in a case with the simple busy polling than that with repeating the sleep/wake-up operation is described.

In the "sleep control mode" in which sleep/wake-up operation is performed, the following processing occurs when a packet has been received during sleep, requiring a CPU cycle for calculation of the processing.
· activate Hardware interrupt
· process Hardware interrupt handler (add in receive list, awake sleeping thread)
· execute context switch, when the polling thread is set up in the user space, to switch from the kernel privileged mode for processing hardware interrupt to the regular mode for awaking the polling thread.

When the amount of calculation (workload) in the "sleep control mode" is compared with that in the "constantly busy poll mode" in which busy polling is simply performed, the amount of calculation in the "sleep control mode" is larger than that in the "constantly busy poll mode" when the traffic inflow frequency is "dense". As described above, when the traffic inflow frequency is "dense", power consumption may be reduced by simply performing constantly busy polling without putting the polling thread to sleep.

### <Summary of mode switching>

When the traffic inflow frequency is "sparse", a power saving effect can be expected by putting the polling thread to sleep, and therefore sleep control is performed. When the traffic inflow frequency is "dense", if the polling thread is put to sleep, the sleep/wake-up operation is repeated at a high frequency. In this case, the interrupt overhead becomes larger than the power saving effect due to sleep, and the power consumption may be deteriorated by performing the sleep control. Therefore, the "constantly busy poll mode" (not the "sleep control mode") is selected.

When the traffic inflow frequency is "sparse", the polling thread is controlled to sleep.

When the traffic inflow frequency is "dense", the polling thread is controlled to perform constantly busy polling. When the traffic inflow frequency is "dense", the number of CPU cycles can be reduced by performing constantly busy polling as compared with a case where the sleep/wake-up operation is repeated at a high frequency.

In this manner, both power saving and low latency are achieved by switching between these receiving modes, depending on the traffic inflow frequency.

### [Summary of the invention]

### < (1) Low latency>

The polling thread (intra-server delay control device 100) includes the packet arrival monitoring unit 110 and the packet dequeuing unit 120, and uses a polling model to monitor an arriving packet and receiving the packet, thereby achieving low-latency in receiving packets. Specifically, the polling thread (intra-server delay control device 100) uses the low-latency polling model to monitor an arriving packet and receive the packet (see reference sign ff in Figs. 1 to 4). Therefore, contention of softIRQ does not occur, to have an effect that the latency is low. In addition, when a packet has arrived during sleep, the polling thread is awoken by a hardIRQ with high priority, to reduce the overhead due to sleep as much as possible.

### <(2) Power saving (part 1)>

The polling thread (intra-server delay control device 100) includes the sleep management unit 130, and the sleep management unit 130 puts the polling thread to sleep while there is no arriving packet, thereby preventing extra power consumption due to needless busy polling by the polling thread.

In addition, the polling thread (intra-server delay control device 100) includes the CPU-frequency/CPU-idle setting unit 140, and the CPU-frequency/CPU-idle setting unit 140 performs dynamic control of the CPU operation frequency. The dynamic control of the CPU operation frequency is used in combination with the sleep control.

As described above, while there is no arriving packet, the polling thread sleeps and control is performed to set the CPU frequency low, so that an increase in power consumption due to busy polling can be prevented.

### <(3) Power saving (part 2)>

The polling thread (intra-server delay control device 100) includes the mode switching control unit 150 and the traffic frequency measurement unit 160. The mode switching control unit 150 measures the traffic inflow frequency and transmits the traffic inflow frequency to the mode switching control unit 150. The mode switching control unit 150 switches the operation mode of the polling thread between the "constantly busy poll mode" and the "sleep control mode" on the basis of the traffic inflow frequency. Specifically, the mode switching control unit 150 switches the operation mode of the polling thread to the "sleep control mode" when the traffic inflow frequency is "sparse", and switches the operation mode of the polling thread to the "constantly busy poll mode" when the traffic inflow frequency is "dense".

### [Characteristic of switching control between "sleep control mode" and "constant busy poll mode"]

Next, an advantage of separating modes instead of controlling such as sleep time is described.

The "sleep control mode" in which sleep/wake-up operation is performed is separated from the "constantly busy poll mode" in which simple busy polling is performed. As a result, it is not necessary to implement the sleep control logic or the like, which is not necessary for the simple busy polling, for the simple busy poll mode. Therefore, unnecessary operation of the extra control logic is skipped to reduce the amount of unnecessary operation and likely reduce power consumption. Conversely, in a case where the operation modes are not separated from each other, a logic of determining sleep control time and the like is implemented and spends such calculation costs, even in a mode in which simple busy polling is performed.

In addition, it becomes easy to code an independent program for each mode, to allow for implementing control specialized for each mode.

### [Operation mode switching point]

Fig. 8 is a diagram illustrating an operation mode switching point. The ordinate axis indicates the power consumption by the polling thread, and the abscissa axis indicates the packet inflow frequency (traffic inflow frequency).

As illustrated in Fig. 8, in a case where the polling thread is performing constantly busy polling, power consumption by the polling thread is constant. In the case of performing sleep control, power consumption by the polling thread increases as the packet inflow frequency increases. Power consumption by the polling thread with sleep control becomes equal to that with the constantly busy polling at a threshold T of the packet inflow frequency, and when the packet inflow frequency exceeds the threshold T, performing the sleep control actually increases the power consumption by the polling thread. From the viewpoint of power consumption by the polling thread, a range from a low packet inflow frequency to the threshold T is a "range to use the sleep control mode" (see reference sign jj in Fig. 8), and a range equal to or greater than the threshold T is a "range to use the constantly busy poll mode" (see reference sign kk in Fig. 8).

That is, after the packet inflow frequency has reached the threshold T, the sleeping time is short and the interrupt overhead exceeds the effect of using the sleep control, even with the sleep control, so that power consumption becomes higher than that with the constantly busy polling (see the two-way arrow ll in Fig. 8). Therefore, the threshold T is an operation mode switching point between the "sleep control mode" and the "constantly busy poll mode".

Incidentally, the power saving effect due to the polling thread sleeping and the interrupt overhead differ depending on the specification of the server to be used. That is, the threshold T varies depending on the server model to be used. On the other hand, since the threshold T has no substantial correlation with the inflowing packet size, the operator may measure the threshold T in advance by experiment using a server to be used for service.

### [Example logics of determining switching]

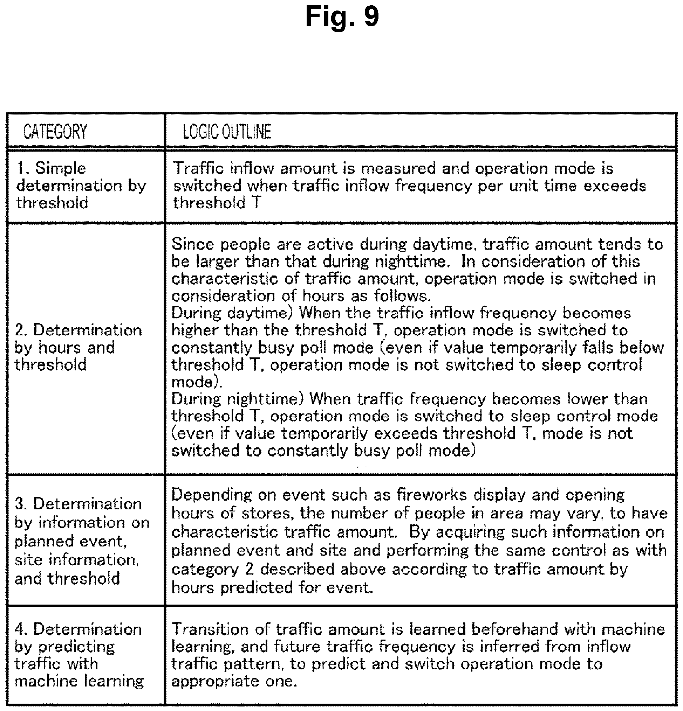

Fig. 9 shows a table of example logics of determining the switching.

As illustrated in Fig. 9, each logic of determining the switching comprises a category and a logic outline for each category.

### <1. Simple determination by threshold>

With this logic, the traffic inflow amount is measured and the operation mode is switched when the traffic inflow frequency per unit time exceeds the threshold T.

### <2. Determination by hours and threshold>

Since people are active during daytime, the traffic amount tends to be larger than that during nighttime. In consideration of this characteristic of the traffic amount, the operation mode is switched in consideration of hours as follows.
During daytime) When the traffic inflow frequency becomes higher than the threshold T, the operation mode is switched to the constantly busy poll mode. In this case, even if the value temporarily falls below the threshold T, the operation mode is not switched to the sleep control mode, thereby preventing hunting in which the operation mode is frequently switched at the threshold T.
During nighttime) When the traffic frequency becomes lower than the threshold T, the operation mode is switched to the sleep control mode. In this case, even if the value temporarily exceeds the threshold T, the mode is not switched to the constantly busy poll mode, thereby preventing hunting in which the operation mode is frequently switched at the threshold T.

### <3. Determination by information on planned event, site information, and threshold>

Depending on an event such as a fireworks display and opening hours of stores, the number of people in an area may vary, to have a characteristic traffic amount. By acquiring such information on a planned event and site and performing the same control as with category 2 described above according to the traffic amount by hours predicted for the event, the operation mode can be switched with high effect.

### <4. Determination by predicting traffic with machine learning>

The transition of the traffic amount is learned beforehand with machine learning, and a future traffic frequency is inferred from an inflow traffic pattern, to predict and switch the operation mode to an appropriate one.

### [Flowchart of processing of NIC and HW interrupt]

Fig. 10 is a flowchart of processing of the NIC and HW interrupt with the polling thread (intra-server delay control device 100).

While the polling thread is active, this operation flow runs in a loop.

When a packet has arrived at the NIC 11, this flow is started. In step S1, the NIC 11 copies arrived packet data by direct memory access (DMA) to the memory area.

In step S2, the polling thread (intra-server delay control device 100) determines whether or not HW interrupt is enabled. If the HW interrupt is enabled (S2: Yes), the processing proceeds to step S3, and if the HW interrupt is disabled (S2: No), the processing of this flow ends.

In step S3, the NIC 11 activates a HW interrupt by putting a HW interrupt (hardIRQ) to the hardIRQ 81 (handler), and adds information indicating that a packet has arrived (NIC device information and the like) in the receive list 186.

In step S4, if the polling thread (intra-server delay control device 100) is sleeping, the NIC 11 awakes the polling thread and ends the processing of this flow.

### [Operation flow of polling thread (intra-server delay control device 100)]

### <Switching Operation mode>

Fig. 11 is a flowchart of switching the operation mode by the mode switching control unit 150 of the polling thread (intra-server delay control device 100).

In step S11, the mode switching control unit 150 receives information on traffic inflow frequency from the traffic frequency measurement unit 160.

In step S12, the mode switching control unit 150 uses received information on traffic inflow frequency to determine which one of the "sleep control mode" and the "constantly busy poll mode" is suitable according to the logic of determining switching illustrated in Fig. 9. When the current operation mode is different from the determined operation mode, the mode switching control unit 150 instructs other units (packet arrival monitoring unit 110, packet dequeuing unit 120, sleep management unit 130, and CPU-frequency/CPU-idle setting unit 140) to use the determined operation mode. When the current operation mode is the same as the determined operation mode, the mode switching control unit 150 does not instruct the other units on the operation mode. Accordingly, the current operation mode is continued.

### <Operation flow of polling thread>

Fig. 12 is a flowchart of switching the operation mode by the polling thread as the polling thread (intra-server delay control device 100).

When a packet has arrived while the polling thread is sleeping, the polling thread is awoken by HW interrupt, and this flow starts.

In step S21, the mode switching control unit 150 disables HW interrupt by the NIC 11. If the HW interrupt occurs during processing, the processing is interrupted. Therefore, the mode switching control unit 150 temporarily disables HW interrupt by the NIC 11.

In step S22, the CPU-frequency/CPU-idle setting unit 140 sets the CPU frequency of the CPU core, with which the polling thread operates, high, and lifts an idle state if the CPU has been in the idle state.

In step S23, the polling thread refers to the receive list 186. The polling thread finds out a device which has caused the HW interrupt and checks information in the receive list 186, indicating that a packet has arrived, in the next step S24.

Note that the polling thread may directly refer to the ring buffer 72 to check whether a packet has arrived or not, instead of referring to a list in the control plane named the receive list 186. For example, the NAPI implemented in the Linux kernel monitors a list in the control plane named a poll_list.

In step S24, the packet arrival monitoring unit 110 determines whether or not information on an arrived packet is present in the receive list 186. If information indicating that a packet has arrived is present in the receive list 186 (S24: Yes), the processing proceeds to step S25. If information indicating that a packet has arrived does not exist in the receive list 186 (S24: No), that is, if there is no packet to be processed, the following processing is skipped, and the processing proceeds to step S30.

In step S25, the polling thread refers to packet data in the ring buffer 72 and transfers the data to the subsequent protocol processing unit 74. Here, when pieces of data exist, the data may be received all at once.

In step S26, the traffic frequency measurement unit 160 measures the traffic inflow frequency and transmits the traffic inflow frequency to the mode switching control unit 150.

The traffic frequency measurement unit 160 may measure the traffic frequency by approximately estimating the traffic frequency from the number of HW interrupts (recorded as statistical information in the kernel) or the like. When the logic of determining switching the operation mode switching only includes light processing such as simple threshold determination described in Fig. 9, the traffic frequency measurement unit 160 may determine the operation mode without transferring the determination to the mode switching control unit 150 (in this case, the traffic frequency measurement unit 160 doubles as the mode switching control unit 150).

In step S27, the sleep management unit 130 puts the polling thread to short sleep so as to conform to the traffic inflow frequency. For example, when the traffic inflow frequency is 5 us, the polling thread is put to sleep for about 3 us.

In step S28, the packet arrival monitoring unit 110 determines whether or not the operation mode instructed from the mode switching control unit 150 is the "sleep control mode". If the operation mode instructed from the mode switching control unit is not the "sleep control mode" (S28: No), the processing returns to step S25 described above.

If the operation mode instructed from the mode switching control unit 150 is the "sleep control mode" (S28: Yes), the packet dequeuing unit 120 determines in step S29 whether or not there is any unreceived packet in the ring buffer 72. If there is an unreceived packet in the ring buffer 72 (S29: Yes), the processing returns to step S25 described above.

Here, the loop from step S25 to step S28 described above is a loop of the constantly busy poll (see steps in an enclosure mm enclosed by a broken line in Fig. 12) (loop other than this is a loop of the sleep control mode).

If there is no unreceived packet in the ring buffer 72 (S29: No), the CPU-frequency/CPU-idle setting unit 140 sets the CPU frequency of the CPU core, with which the polling thread operates, low in step S30, to cause the CPU to be idle.

In step S31, the packet arrival monitoring unit 110 deletes the NIC information from the receive list 186.

In step S32, the packet arrival monitoring unit 110 enables HW interruption by the NIC.

In step S33, the sleep management unit 130 puts the polling thread to sleep, to end the processing of this flow.

### [Hardware configuration]

The intra-server delay control device 100 according to the above embodiment is implemented by a computer 900 having a configuration as illustrated in Fig. 13, for example.

Fig. 13 is a diagram illustrating an example hardware configuration of the computer 900 to implement the functions of the intra-server delay control device 100.

The computer 900 includes a CPU 901, a ROM 902, a RAM 903, an HDD 904, a communication interface (I/F) 906, an input/output interface (I/F) 905, and a medium interface (I/F) 907.

The CPU 901 operates on the basis of a program stored in the ROM 902 or the HDD 904, to control the components of the intra-server delay control device 100 illustrated in Figs. 1 to 4. The ROM 902 stores a boot program to be executed by the CPU 901 when the computer 900 starts, a program depending on hardware of the computer 900, and the like.

The CPU 901 controls an input device 910 such as a mouse and a keyboard, and an output device 911 such as a display, via the input/output I/F 905. The CPU 901 acquires data from the input device 910 and outputs generated data to the output device 911, via the input/output I/F 905. Note that a graphics processing unit (GPU) or the like may be used as a processor in conjunction with the CPU 901.

The HDD 904 stores a program to be executed by the CPU 901, data to be used by the program, and the like. The communication I/F 906 receives data from another device via a communication network (for example, network (NW) 920), outputs the data to the CPU 901, and transmits data generated by the CPU 901 to another device via the communication network.

The medium I/F 907 retrieves a program or data stored in a recording medium 912, and outputs the program or data to the CPU 901 via the RAM 903. The CPU 901 loads a program relating to intended processing from the recording medium 912 into the RAM 903 via the media I/F 907 and executes the loaded program. The recording medium 912 is an optical recording medium such as a digital versatile disc (DVD) and a phase change rewritable disk (PD), a magneto-optical recording medium such as a magneto optical disk (MO), a magnetic recording medium, a conductor memory tape medium, a semiconductor memory, or the like.

For example, in a case where the computer 900 functions as the intra-server delay control device 100 designed as a device according to the present embodiment, the CPU 901 of the computer 900 implements the functions of the intra-server delay control device 100 by executing a program loaded into the RAM 903. Further, the HDD 904 stores the data in the RAM 903. The CPU 901 retrieves the program relating to the intended processing from the recording medium 912 and executes the program. Additionally, the CPU 901 may retrieve the program relating to the intended processing from another device via the communication network (NW 920).

### [Cases of applied system]

### (Polling thread set up in kernel)

As with the polling thread (intra-server delay control device 100) illustrated in Fig. 2, the invention is applicable to an intra-server delay control device to be started as a thread in a kernel to monitor an arriving packet with a polling model. In this case, the OS is not limited. Also, the OS is not limited to run under a virtualized server environment. Therefore, the intra-server delay control system can be applied to the configurations illustrated in Figs. 14 and 15.

### <Case of the invention applied to model including VM>

Fig. 14 is a diagram illustrating a case where an intra-server delay control system 1000A is applied to an interrupt model in a virtualized server environment including a general-purpose Linux kernel (registered trademark) and a VM**.** The same components as those in Figs. 1 and 18 are denoted by the same reference signs.

As illustrated in Fig. 14, the intra-server delay control system 1000A has the intra-server delay control device 100 set up in a kernel 171 of a guest OS 70, and the intra-server delay control device 100 set up in a kernel 91 of a host OS 90.

Specifically, servers include the host OS 90 under which external processes inside and outside a virtual machine can run, and the guest OS 70 that runs in a virtual machine.

The host OS 90 includes the kernel 91 and resources in a memory space in the server with the host OS 90, including: a ring buffer 22 that is managed by the kernel 91; a receive list 186 (Fig. 2) added with information on a net device indicating a device which has caused a hardware interrupt (hardIRQ) from the NIC 11; a vhost-net module 221 that is a kernel thread; a tap device 222 that is a virtual interface formed by the kernel 91; and a virtual switch (br) 223.

The kernel 91 includes the intra-server delay control device 100.

The Kernel 91 transmits a packet to a virtual machine 40 including Linux (registered trademark) and a KVM 30, via the tap device 222.

On the other hand, the guest OS 70 includes the kernel 171, a ring buffer 52, and a driver 53, and the driver 53 includes a virtio-driver 531.

The kernel 171 includes the intra-server delay control device 100, and a protocol processing unit 74 that performs protocol processing of a dequeued packet.

The kernel 171 transmits a packet to a packet processing APL 1 via the protocol processing unit 74.

Thus, in the system configured as a virtual server including a VM, a packet is transferred with a shorter delay in the server without any modification to the APL in both the host OS 90 and the guest OS 70.

### <Case of the invention applied to container-based model>

Fig. 15 is a diagram illustrating a case where an intra-server delay control system 1000B is applied to an interrupt model in a container-based virtualized server environment. The same components as those in Figs. 1 and 14 are denoted by the same reference signs.

As illustrated in Fig. 15, the intra-server delay control system 1000B includes a container-based configuration to replace the guest OS 70 with a container 211. The container 211 includes a virtual NIC (vNIC) 212.

A system in a virtual server by way of a container or the like can transfer a packet with a shorter delay in the server, without any modification to the APL.

The mode in which the polling thread is set up in the kernel has been described above. Next, a mode in which a polling thread is set up in a user space is described.

### (Polling thread set up in user space)

As illustrated in Fig. 3, the present embodiment is applicable to a case with the polling thread (intra-server delay control device 100) set up in a user space. In this case, the OS is not limited. Also, the OS is not limited to run under a virtualized server environment. Therefore, the intra-server delay control system can be applied to the configurations illustrated in Figs. 16 and 17.

### <Case of the invention applied to model including VM>

Fig. 16 is a diagram illustrating a case where an intra-server delay control system 1000C is applied to an interrupt model in a virtualized server environment including a general-purpose Linux kernel (registered trademark) and a VM. The same components as those in Figs. 1 and 14 are denoted by the same reference signs.

As illustrated in Fig. 16, the intra-server delay control system 1000C includes a host OS 20 under which external processes inside and outside the virtual machine can run, and the host OS 20 has a kernel 21 and a driver 23. The intra-server delay control system 1000C further includes a NIC 11 of HW connected to the host OS 20, a polling thread (intra-server delay control device 100) set up in a user space 60, a virtual switch 53, a guest OS 50 to run in a virtual machine, and a polling thread (intra-server delay control device 100) connected to the host OS 20 and set up in the user space 60.

Thus, in the system configured as a virtual server including a VM, a packet is transferred with a shorter delay in the server without any modification to the APL in any of the Oss of the host OS 20 and the guest OS 50.

### <Case of the invention applied to container-based model>

Fig. 17 is a diagram illustrating a case where an intra-server delay control system 1000D is applied to an interrupt model in a container-based virtualized server environment. The same components as those in Figs. 1, 14, and 16 are denoted by the same reference signs.

As illustrated in Fig. 17, the intra-server delay control system 1000D includes a container-based configuration to replace the guest OS 50 in Fig. 16 with the container 211. The container 211 includes the virtual NIC (vNIC) 212.

A system in a virtual server by way of a container or the like can transfer a packet with a shorter delay in the server, without any modification to the APL.

### <Case of the invention applied to bare-metal(non-virtualized) model>

The present invention can be applied to a non-virtualized system such as a bare-metal system. A non-virtualized system can transfer a packet with a shorter delay in the server without any modification to the APL.

### <Scale-in, scale-out>

In a case where the amount of traffic is large and a plurality of NIC devices and NIC ports are used, the polling thread may be scaled in or scaled out, while HW interrupt frequency is controlled, by running a plurality of polling threads in association with the NIC devices and the NIC ports.

### <Scaling>

In a case where the number of traffic flows increases, the present invention can be scaled out with respect to the network load, by way of the number of CPUs to be assigned to the packet arrival monitoring thread being increased in cooperation with receive-side scaling (RSS) to process inbound network traffic with a plurality of CPUs.

### <Application to I/O by PCI device such as accelerator>

Applied cases to I/O by a network interface card (NIC) have been described, but the present technique is also applicable to I/O by a PCI device such as an accelerator (FPGA/GPU or the like). In particular, the present technique can be used for, for example, polling at the time of receiving a response on an offload result of forward error correction (FEC) to an accelerator in the **vRAN.**

### <Application to case with processor other than CPU>

The present invention is similarly applicable to a case with a processor, such as GPU/FPGA/application specific integrated circuit (ASIC), when the processor can be put into an idle state, in addition to a case with a CPU.

### [Advantageous effects]

As described above, the intra-server delay control device 100 (see Figs. 1 and 2) is set up in a kernel space of an OS and started as a thread to use a polling model to monitor an arriving packet, wherein the thread has operation modes of a sleep control mode in which the thread is put to sleep and a constantly busy poll mode in which the thread is kept constantly busy polling, and the intra-server delay control device includes: the traffic frequency measurement unit 160 that measures traffic inflow frequency; and the mode switching control unit 150 that switches the operation mode of the thread between the sleep control mode and the constantly busy poll mode, on the basis of the traffic inflow frequency measured by the traffic frequency measurement unit 160.

In a conventional case, as indicated by the two-way arrow ll in Fig. 8, there has been a problem that after the packet inflow frequency has reached the threshold T, the sleeping time is short and the interrupt overhead exceeds the effect of using the sleep control, even with the sleep control, so that power consumption becomes higher than that with the constantly busy polling.

In the intra-server delay control device 100, the mode switching control unit 150 switches the operation mode of the thread (polling thread) between the sleep control mode and the constantly busy poll mode, on the basis of the traffic inflow frequency, such as when the traffic inflow frequency falls on a predetermined threshold (threshold T in Fig. 8). This allows for achieving power saving while achieving low latency by preventing sleep and wake-up operation when the traffic inflow frequency is "dense". Specifically, by dynamically switching the mode of receiving a packet to an appropriate one (sleep control mode/constantly busy poll mode) according to the traffic inflow frequency, a power saving effect through sleeping can be achieved while the traffic inflow frequency is sparse, and when the traffic inflow frequency becomes "dense" and the interrupt overhead becomes larger than the power saving effect through sleeping, the mode is switched to constantly busy polling, to prevent deterioration of power consumption.

In addition, the following effects are obtained by switching the mode between the "sleep control mode" and the "constantly busy poll mode" instead of controlling such as sleep time during sleep control. That is, since it is not necessary to implement the sleep control logic or the like, which is not necessary for simple busy polling, for the simple busy poll mode, unnecessary operation of the extra control logic is skipped to likely reduce power consumption. In addition, it becomes easy to code an independent program for each mode, to allow for implementing control specialized for each mode.

In addition, the polling model is used to monitor an arriving packet and receive the packet, to have no contention of softIRQ to shorten latency. In addition, when a packet has arrived during sleep, the polling thread is awoken by a hardIRQ with high priority, to reduce the overhead due to sleep as much as possible.

In addition, the polling thread is put to sleep and controlled to set the CPU frequency low, while there is no arriving packet, so that an increase in power consumption due to busy polling is prevented (power saving).

In addition, the present invention can be applied to a case where a polling thread is set up in the kernel space, as with the NAPI or KBP.

In addition, the intra-server delay control device 100 (see Figs. 1 and 3) is set up in a user space and started as a thread to use a polling model to monitor an arriving packet, wherein the thread (polling thread) has operation modes of a sleep control mode in which the thread is put to sleep and a constantly busy poll mode in which the thread is kept constantly busy polling, and the intra-server delay control device includes: the traffic frequency measurement unit 160 that measures traffic inflow frequency; and the mode switching control unit 150 that switches the operation mode of the thread between the sleep control mode and the constantly busy poll mode, on the basis of the traffic inflow frequency measured by the traffic frequency measurement unit 160.

Such a configuration achieves power saving while achieving low latency by preventing sleep and wake-up operation when the traffic inflow frequency is "dense".

In addition, the present invention can be applied to a case where the polling thread is set up in a user space, as with the DPDK.

In addition, a guest OS (guest OS 70) (see Fig. 14) running under a virtual machine includes: a kernel (kernel 171); a ring buffer (ring buffer 72) (see Fig. 14) that is in a memory space in a server with the guest OS and managed by the kernel; the packet arrival monitoring unit 110 that monitors a pole list added with net device information indicating a device which has caused a hardware interrupt from an interface unit (NIC 11) and confirms whether or not a packet has arrived; the packet dequeuing unit 120 that, when a packet has arrived, executes dequeuing to refer to the packet stored in the ring buffer (ring buffer 72) and delete a corresponding queue entry from the ring buffer; and a protocol processing unit that performs protocol processing of the dequeued packet on which pulling has been performed. The intra-server delay control device 100 is started as a thread in the kernel to use a polling model to monitor an arriving packet. The intra-server delay control device 100, as the thread (polling thread), has operation modes of a sleep control mode in which the thread is put to sleep and a constantly busy poll mode in which the thread is kept constantly busy polling. The intra-server delay control device 100 includes: the traffic frequency measurement unit 160 that measures traffic inflow frequency; and the mode switching control unit 150 that switches an operation mode of the thread between the sleep control mode and the constant busy poll mode, on the basis of the traffic inflow frequency measured by the traffic frequency measurement unit 160.

With this configuration, a server with a guest OS (guest OS 70) in a system configured as a virtual server including a VM can achieve power saving, while achieving low latency, by preventing sleep and wake-up operation when the traffic inflow frequency is "dense".

In addition, a host OS (host OS 90 in Fig. 14 or host OS 20 in Figs. 16 and 17) under which external processes inside and outside the virtual machine can run includes: a kernel (kernel 91) a ring buffer (ring buffer 72) (see Fig. 18) that is in a memory space in a server with the host OS and managed by the kernel; the packet arrival monitoring unit 110 that monitors a pole list added with net device information indicating a device which has caused a hardware interrupt from an interface unit (NIC 11) and confirms whether or not a packet has arrived; the packet dequeuing unit 120 that, when a packet has arrived, executes dequeuing to refer to the packet stored in the ring buffer and delete a corresponding queue entry from the ring buffer; and the tap device 222 (see Fig. 14) that is a virtual interface created by the kernel (kernel 21). The intra-server delay control device 100 is started as a thread in the kernel to use a polling model to monitor an arriving packet. The intra-server delay control device 100, as the thread, has operation modes of a sleep control mode in which the thread is put to sleep and a constantly busy poll mode in which the thread is kept constantly busy polling. The intra-server delay control device 100 includes: the traffic frequency measurement unit 160 that measures traffic inflow frequency; and the mode switching control unit 150 that switches the operation mode of the thread between the sleep control mode and the constant busy poll mode, on the basis of the traffic inflow frequency measured by the traffic frequency measurement unit 160.

With this configuration, a server with a kernel (kernel 171) and a host OS (host OS 90) in a system configured as a virtual server including a VM can achieve power saving, while achieving low latency, by preventing sleep and wake-up operation when the traffic inflow frequency is "dense".

In the intra-server delay control device 100 (see Figs. 1 to 4), the mode switching control unit 150 switches the operation mode of the thread (polling thread) to the sleep control mode until the traffic inflow frequency reaches a predetermined threshold (threshold T in Fig. 8) from a low range, and switches the operation mode to the constantly busy poll mode when the traffic inflow frequency is equal to or greater than the predetermined threshold (threshold T in Fig. 8).

With this configuration, as illustrated in Fig. 8, the operation mode of the thread (polling thread) is switched to the sleep control mode in a "range where the sleep control mode should be used" (see reference sign jj in Fig. 8) from a low packet inflow frequency to the threshold T, and switched to the constantly busy poll mode in a "range where the constantly busy poll mode should be used" (see reference sign kk in Fig. 8) equal to or greater than the threshold T. As a result, when the traffic inflow frequency is "dense" as being equal to or greater than the threshold T, power consumption can be reduced by switching to the constantly busy poll mode. Note that an optimum value of the threshold T is selected by the logics for determining switching illustrated in the table of Fig. 9.

The intra-server delay control device 100 (see Figs. 1 to 4) includes: the packet arrival monitoring unit 110 that monitors (polls) an arriving packet from an interface unit (NIC 11) and confirms whether or not a packet has arrived in the constantly busy poll mode; and the sleep management unit 130 that puts the thread (polling thread) to sleep in the sleep control mode when there is no arriving packet for a predetermined period and awakes the thread (polling thread) by a hardware interrupt (hardIRQ) when a packet has arrived.

With this configuration, the packet arrival monitoring unit 110 uses the polling model to monitor an arriving packet and receive the packet in the constantly busy poll mode, so that a soft IRQ contention does not occur and the delay can be shortened. In addition, when a packet has arrived during sleeping during the sleep control mode, the sleep management unit 130 awakes the polling thread by a hardIRQ with high priority, so that the overhead due to sleep can be reduced as much as possible.

Note that, in the above embodiment, a case where a polling thread is set up in the kernel space as with the NAPI or KBP has been described, but a mode (see Figs. 3 and 17) in which the polling thread is set up in a user space as with the DPDK may be adopted.

Further, with respect to the processes in the above-described embodiment, all or some of processes described as being automatically performed may be manually performed, or all or some of processes described as being manually performed may be automatically performed with a known method. In addition, information including the processing procedures, the control procedures, the specific names, the various kinds of data, and the parameters described above in the specification or shown in the drawings can be modified as desired, unless otherwise particularly specified.

Further, the components of the devices illustrated in the drawings are functionally conceptual, and need not be physically designed as illustrated. In other words, specific forms of separation/integration of the components of the devices are not limited to those illustrated in the drawings, and all or part of the components can be functionally or physically separated/integrated in any unit, in accordance with various kinds of loads, use conditions, and the like.

Further, some or all of the components, functions, processing units, processing means, and the like described above may be implemented by hardware, such as being formed with an integrated circuit. Also, the components, functions, and the like may be implemented by software for a processor interpreting and executing a program to implement the functions. Information such as a program, a table, and a file for implementing the functions can be stored in a recording device such as a memory, a hard disk, and a solid state drive (SSD), or in a recording medium such as an integrated circuit (IC) card, a secure digital (SD) card, and an optical disc.

### Reference Signs List

1 Packet processing application (APL)
10 HW
11 NIC (physical NIC) (interface unit)
20, 90 Host OS (OS)
22, 52, 72 Ring buffer
50, 70 Guest OS (OS)
60 User space
74 Protocol processing unit
86, 186 Receive list (poll list)
91, 171 Kernel
100 Intra-server delay control device (polling thread)
110 Packet arrival monitoring unit
120 Packet dequeuing unit
130 Sleep management unit
140 CPU-frequency/CPU-idle setting unit
150 Mode switching control unit
160 Traffic frequency measurement unit
211 Container
1000, 1000A, 1000B, 1000C, 1000D Intra-server delay control system
T Threshold

## Claims

1. An intra-server delay control device set up in a kernel space of an OS and started as a thread to use a polling model to monitor an arriving packet, wherein
the thread has operation modes of a sleep control mode in which the thread is put to sleep and a constantly busy poll mode in which the thread is kept constantly busy polling, and
the intra-server delay control device comprises:
a traffic frequency measurement unit that measures traffic inflow frequency; and
a mode switching control unit that switches an operation mode of the thread between the sleep control mode and the constantly busy poll mode, on the basis of the traffic inflow frequency measured by the traffic frequency measurement unit.

2. An intra-server delay control device set up in a user space and started as a thread to use a polling model to monitor an arriving packet, wherein
the thread has operation modes of a sleep control mode in which the thread is put to sleep and a constantly busy poll mode in which the thread is kept constantly busy polling,
the intra-server delay control device comprising:
a traffic frequency measurement unit that measures traffic inflow frequency; and
a mode switching control unit that switches an operation mode of the thread between the sleep control mode and the constant busy poll mode, on the basis of the traffic inflow frequency measured by the traffic frequency measurement unit.

3. An intra-server delay control device started as a thread in a kernel of a guest OS running under a virtual machine, the thread using a polling model to monitor an arriving packet, the guest OS including
the kernel,
a ring buffer that is in a memory space in a server with the guest OS and managed by the kernel,
a packet arrival monitoring unit that monitors a pole list added with net device information indicating a device which has caused a hardware interrupt from an interface unit and confirms whether or not a packet has arrived;
a packet dequeuing unit that, when a packet has arrived, executes dequeuing to refer to the packet stored in the ring buffer and delete a corresponding queue entry from the ring buffer, and
a protocol processing unit that performs protocol processing of the dequeued packet,
wherein the thread has operation modes of a sleep control mode in which the thread is put to sleep and a constantly busy poll mode in which the thread is kept constantly busy polling, and
the intra-server delay control device comprises:
a traffic frequency measurement unit that measures traffic inflow frequency; and
a mode switching control unit that switches an operation mode of the thread between the sleep control mode and the constant busy poll mode, on the basis of the traffic inflow frequency measured by the traffic frequency measurement unit.

4. An intra-server delay control device started as a thread in a kernel of a host OS under which external processes inside and outside a virtual machine with the host OS can run, the thread using a polling model to monitor an arriving packet, the host OS including
the kernel,
a ring buffer that is in a memory space in a server with the host OS and managed by the kernel,
a packet arrival monitoring unit that monitors an arriving packet from an interface unit and confirms whether or not a packet has arrived,
a packet dequeuing unit that, when a packet has arrived, executes dequeuing to refer to the packet stored in the ring buffer and delete a corresponding queue entry from the ring buffer, and
a tap device that is a virtual interface created by the kernel,
wherein the thread has operation modes a sleep control mode in which the thread is put to sleep and a constantly busy poll mode in which the thread is kept constantly busy polling, and
the intra-server delay control device comprises:
a traffic frequency measurement unit that measures traffic inflow frequency; and
a mode switching control unit that switches an operation mode of the thread between the sleep control mode and the constantly busy poll mode, on the basis of the traffic inflow frequency measured by the traffic frequency measurement unit.

5. The intra-server delay control device according to any one of claims 1 to 4, wherein
the mode switching control unit switches the operation mode of the thread to the sleep control mode until the traffic inflow frequency reaches a predetermined threshold from a low range, and switches the operation mode of the thread to the constantly busy poll mode when the traffic inflow frequency is equal to or greater than the predetermined threshold.

6. The intra-server delay control device according to claim 1 or 2 further comprising
a packet arrival monitoring unit that, during the constantly busy poll mode, monitors a pole list added with net device information indicating a device which has caused a hardware interrupt from an interface unit and confirms whether or not a packet has arrived, and
a sleep management unit that, during the sleep control mode, puts the thread to sleep when no packets have arrived over a predetermined period, and when a packet has arrived, causes a hardware interrupt for the thread to awake the thread.

7. An intra-server delay control method of an intra-server delay control device that is set up in a kernel space of an OS and started as a thread to use a polling model to monitor an arriving packet, wherein
the thread has operation modes of a sleep control mode in which the thread is put to sleep and a constantly busy poll mode in which the thread is kept constantly busy polling, and
the intra-server delay control method comprises:
a step of measuring traffic inflow frequency; and
a step of switching an operation mode of the thread between the sleep control mode and the constantly busy poll mode, on the basis of the measured traffic inflow frequency.

8. An intra-server delay control method of an intra-server delay control device that is set up in a user space and started as a thread to use a polling model to monitor an arriving packet, wherein
the thread has operation modes of a sleep control mode in which the thread is put to sleep and a constantly busy poll mode in which the thread is kept constantly busy polling, and
the intra-server delay control method comprises:
a step of measuring traffic inflow frequency, and
a step of switching an operation mode of the thread between the sleep control mode and the constantly busy poll mode, on the basis of the measured traffic inflow frequency.

9. A program for causing a computer to function as the intra-server delay control device according to any one of claims 1 to 4.
